(19) Europäisches Patentamt / European Patent Office / Office européen des brevets

(11) **EP 2 657 804 A1**

(12) **EUROPEAN PATENT APPLICATION**

(43) Date of publication:
**30.10.2013 Bulletin 2013/44**

(51) Int Cl.:
***G05F 1/67*** *(2006.01)*

(21) Application number: **12165175.6**

(22) Date of filing: **23.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Research Ltd.**
**8050 Zürich (CH)**

(72) Inventors:
• **Escobar, Gerardo**
**00380 Helsinki (FI)**

• **Ho, Ngai-man**
**00380 Helsinki (FI)**
• **Pettersson, Sami**
**00380 Helsinki (FI)**

(74) Representative: **Kolster Oy Ab**
**Iso Roobertinkatu 23**
**PO Box 148**
**00121 Helsinki (FI)**

(54) **Method and arrangement for estimating power variations in photovoltaic systems**

(57) Method and arrangement of estimating the power variation in response to change of voltage reference in a maximum power point tracker of a photovoltaic system. The method comprising sampling the power produced by the photovoltaic system with a fixed number of voltages, out of which voltages some are the same and some are different by an amount of a given increment, with the restriction that the average of these voltages produce a net change with respect to the starting voltage in the direction of the increment calculated during previous estimation of the power variation, and estimating the power variation between the first and the last sample using the obtained power samples in which estimated power variation the change of power due to changed environmental conditions is removed.

Fig. 4

**Description**

FIELD OF THE INVENTION

The present invention relates to tracking the maximum power point in photovoltaic panels. More specifically, the present invention relates to estimating power variation in response to the voltage perturbations.

BACKGROUND OF THE INVENTION

The most common maximum power point tracking (MPPT) algorithms are perturbation and observation (P&O) and incremental conductance (Inccond), and slight modifications to them. In [1], [2] and [3] a survey on the different MPPT schemes is presented as well as a comparative study. The idea behind the perturbation-based approach consists of perturbing the PV voltage by adding or subtracting a small increment, and then observing the resulting changes in power. On the basis of these changes, a decision is then made to decrease or increase the PV voltage in the next sampling time. Out of these algorithms a reference for the PV voltage is proposed, which is later used in a PI controller to generate the final control signal, usually the amplitude of the reference for the grid-side current. Both methods, P&O and IncCond, usually oscillate close to the maximum power point (MPP) as they are based on a perturb and observe process.

An interesting issue in MPPT schemes that has attracted the attention of many researchers is the performance under rapidly changing atmospheric conditions [4], [5], [6], [7], [8]. It has been observed that P&O as well as IncCond suffer from considerable excursions in the wrong direction after rapidly changing irradiation conditions, that is, these methods fail to track the MPP effectively.

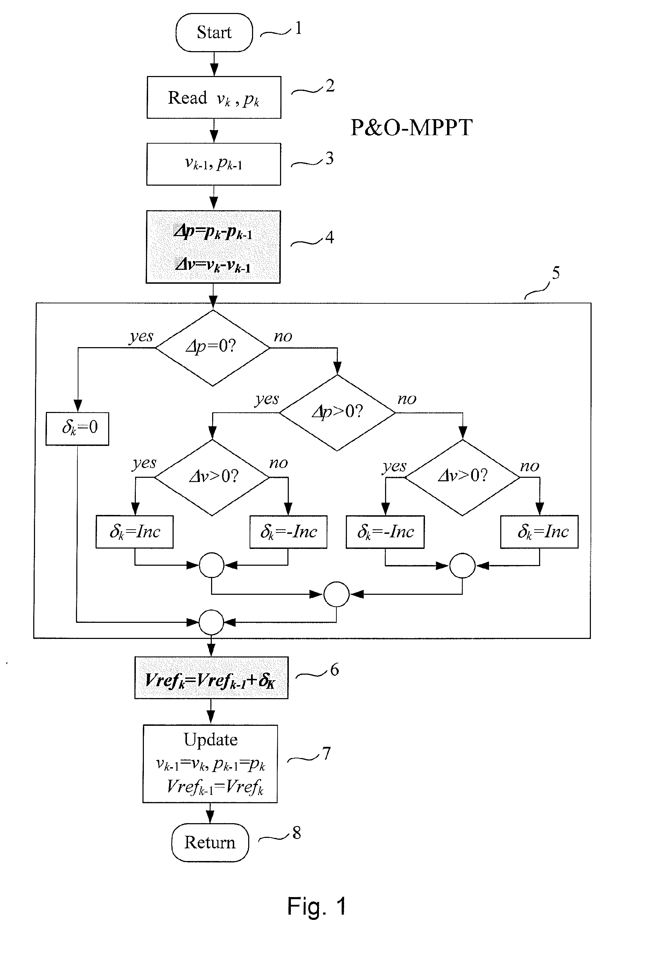

The conventional P&O algorithm is presented in the flowchart in Figure 1 and shortly described here below. The procedure is started in block 1, and voltage and power values are read in block 2, and variables are initialized in block 3.

The principle of the algorithm is simple, it consists of the detection of the sign of the slope $\Delta p / \Delta v$ of the $pv$ characteristic curve, which gives a rough location of the operation point relative to the MPP. That is, if $\Delta p / \Delta v > 0$ then the actual location of the operation point is to the left of the MPP, i.e., $v_k < v_{Mpp}$, therefore, the voltage must be increased. In case $\Delta p / \Delta v < 0$ then the voltage must be decreased, as the operation point is located to the right of the MPP, i.e., $v_k > v_{MPP}$. In case of two equal consecutive power samples, or equivalently $\Delta p / \Delta v = 0$, then the reference voltage is kept constant. This last situation is very unlikely to happen in practice. The above detection of the sign of the slope is carried out in comparison elements in block 5.

To obtain the slope $\Delta p / \Delta v$, the PV voltage $v$ has to be perturbed by directly perturbing its reference *Vref*. This is performed by adding or subtracting in block 6 a constant increment Inc during a sampling period $T_s$, which leads to a variation in power as well. The information of two consecutive samples, at sampling times $k$-1 and $k$, is recovered and used to obtain variations $\Delta p = p_k - p_{k-1}$ and $\Delta v = v_k - v_{k-1}$ shown in block 4. The sign of the slope $\Delta p / \Delta v$ is then used to fix the direction of the next perturbation for the voltage as described above. Here and in what follows, subindex $k$ is used to indicate the $k$-th sample, e.g., $v_k$ is the $k$-th sample of variable $v$. After the new reference voltage $Vref_k$ is calculated in block 6, the procedure updates, in block 7, the values such that in the next round of the procedure the newly obtained values are available as old values. After the update, the procedure returns to block 8, and it is started again.

It is noted that larger perturbation increments yield to faster tracking, however, considerable oscillations may arise around the MPP. Notice that, as a consequence, part of the available power will not be extracted during this oscillatory operation. Decreasing the perturbation step increases the accuracy, however, it may also decrease the tracking speed. This behavior is inherent to any perturb and observe -based approach such as P&O and IncCond. According to [4], a step size of 2% of the open circuit voltage ($V_{oc}$) seems to be a good selection. Fixing the value of the sampling period $T_s$ is a little more involved as it is related to the settling time of the voltage loop.

The settling time is composed by the DC link capacitor voltage dynamics and the PI used to regulate such a capacitor voltage $v$ towards its reference *Vref*. Notice that enough time must be consider to allow the DC link voltage $v$ to reach its reference *Vref.*

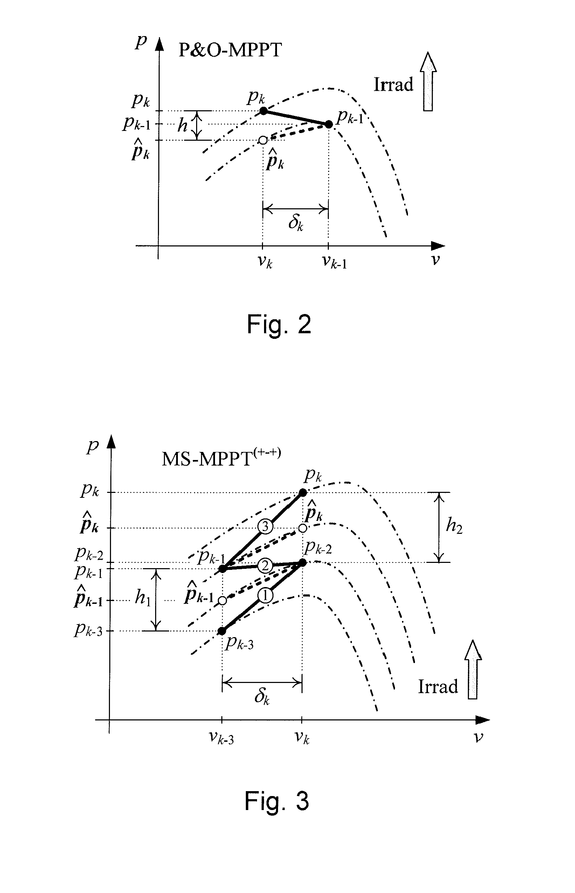

It is well known that both methods, P&O and IncCond, fail to track the MPP during irradiation and temperature changes [9]. As an example consider the $pv$-plot on Figure 2, where a step increment on irradiation is considered, and a negative increment on voltage $\delta_k = $ -*Inc* has been determined. The two irradiation conditions are represented here using two $pv$ characteristic curves (dash-dot line).

The starting operation point has power $p_{k-1}$. Notice that if constant irradiation is considered, then the new operation point would have power $\hat{p}_k$. This represents a power reduction, i.e., $\Delta p < 0$. However, as the real position is the result of combined effects coming from the irradiation change plus the intentional voltage increment $\delta_k$, this produces power $p_k$. This represents an increment in power, i.e., $\delta p > 0$, which is opposite to the case of constant irradiation. The decision, following either the P&O or IncCond method, will be to apply in the next step a negative increment to voltage, which clearly conducts the operating point in a wrong direction.

## BRIEF DESCRIPTION OF THE INVENTION

An object of the present invention is to provide a method and an arrangement for implementing the method so as to solve the above problem. The object of the invention is achieved by a method and an arrangement which are characterized by what is stated in the independent claims. The preferred embodiments of the invention are disclosed in the dependent claims.

The invention is based on the idea of using multiple samples of power in estimating the power variation due to the change of reference voltage. The power variation together with the voltage change is then used in making the decision whether the voltage reference should be increased or decreased for tracking the maximum power point. Multiple samples are used for removing the change of power due to the possible changes in environmental conditions, such as temperature or irradiation changes.

The present invention is suitable both for single- and dual-stage grid-connected inverters. The multi-sample MPPT (MS-MPPT) of the disclosure guarantees a fast response under rapidly and gradually changing environmental conditions, i.e., cell temperature and solar irradiation changes. Further, the MS-MPPT reduces the effect of environmental changes and, thus, observes only the effect due to the intentional increment.

## BRIEF DESCRIPTION OF THE DRAWINGS

In the following the invention will be described in greater detail by means of preferred embodiments with reference to the accompanying drawings, in which

Figure 1 shows a flowchart of the conventional P&O-MPPT method;
Figure 2 shows a $p$ vs. $\nu$ plot to describe P&O-MPPT operation during irradiation changes;
Figure 3 shows a $p$ vs. $\nu$ plot to describe the operation of an embodiment of the invention;
Figure 4 shows a flowchart of an embodiment of the invention.
Figures 5, 6, 7 and 8 show $p$ vs. $\nu$ plots to describe the operation of different embodiments of the invention;
Figure 9 shows a flowchart of an embodiment of the invention;
Figures 10 and 11 show $p$ vs. $\nu$ plots to describe the operation of different embodiments of the invention;
Figure 12 shows an irradiation profile used for tests;
Figures 13, 14 and 15 show responses of the conventional P&O method during irradiation changes; and
Figures 16, 17 and 18 show responses of an MPP tracker employing an embodiment of the present invention during irradiation changes.

## DETAILED DESCRIPTION OF THE INVENTION

Figure 3 shows a $p\nu$ curve describing (solid line) the operation of the method of the present disclosure during irradiation changes, and (dash-dot line) the characteristic curves at the four different irradiations. As an example a gradually increasing irradiation is considered and it is assumed that irradiation increases during the whole process.

In the case of Figure 3, four samples are considered, with three equal sampling periods of $T_s$. This produces four sample points, with corresponding sampled powers $p_{k-3}$, $p_{k-2}$, $p_{k-1}$ and $p_k$. In the first sampling period, marked with ①, the method applies a voltage increment with the direction calculated in a previous sequence (positive in this case), i.e., $Vref_k = \nu_k + \delta_k$. As a result, the operation point moves from power $p_{k-3}$, the starting point, to the point with *power* $p_{k-2}$. In the sampling period marked with ②, the same increment is applied but in the opposite direction, i.e., $Vref_k = \nu_k - \delta_k$. This brings to point with $p_{k-1}$. Finally, in the sampling period marked with ③, again the same voltage increment is applied with the original direction, i.e., $Vref_k = \nu_k + \delta_k$. After these increments, the effective voltage increment at the end of the process is simply $\delta_k$.

Consider the sequence of the first two sampling periods ① and ②. The overall power difference after this sequence is given by

$$h_1 = p_{k-1} - p_{k-3} \tag{1}$$

Assuming that the PV voltage obtains the same value after these two sampling periods, then it can be stated that the power difference $h_1$ is due to irradiation changes only. In other words, if the environmental conditions remained constant, the power would also be at the same level as in the beginning of the procedure.

The power difference $h_1$ can now be used to reconstruct the power estimate $\hat{p}_{k-1}$ as follows:

$$\hat{p}_{k-1} = p_{k-3} + \frac{1}{2}\left( p_{k-1} - p_{k-3} \right) = \frac{1}{2}\left( p_{k-3} + p_{k-1} \right) \qquad (2)$$

In the above it is concluded that, since the power has increased by the amount of power difference $h_1$ during the first two sampling periods, the power increase during the first sampling period is half of the calculated power difference. Thus, when operating at point $p_{k-2}$, the power has increased half the amount of $h_1$ due to irradiation. This leads to the fact that the power estimate $\hat{p}_{k-1}$ is in the same *pv* characteristic curve as point $p_{k-2}$, i.e., they both are under the same irradiation conditions. These two points with powers $\hat{p}_{k-1}$ and $p_{k-2}$ can be used to obtain a first power variation as follows:

$$\Delta p_1 = p_{k-2} - \frac{1}{2}\left( p_{k-3} + p_{k-1} \right) \qquad (3)$$

where the effect of the irradiation changes has been eliminated, preserving only the effect of the intentional voltage increment $\delta_k$ -

Following similar arguments, a second power difference $h_2$ due to the effect of irradiation changes can only be computed as:

$$h_2 = p_k - p_{k-2} \qquad (4)$$

The power estimate $\hat{p}_k$ can now be reconstructed as follows:

$$\hat{p}_k = p_k - \frac{1}{2}\left( p_k - p_{k-2} \right) = \frac{1}{2}\left( p_k + p_{k-2} \right). \qquad (5)$$

Out of which a second power variation can be computed as

$$\Delta p_2 = \frac{1}{2}\left( p_k + p_{k-2} \right) - p_{k-1} \qquad (6)$$

which, as before, considers only the effect of the intentional voltage increment $\delta_k$, disregarding the effect of the irradiation changes.

The average of $\Delta p_1$ and $\Delta p_2$ can be used as the final power variation. This is given by

$$\Delta p = \frac{1}{2}\left( \Delta p_1 + \Delta p_2 \right) = \frac{1}{4}\left( p_k - 3p_{k-1} + 3p_{k-2} - p_{k-3} \right). \qquad (7)$$

It can be stated that the power variation $\Delta p$ in (7) corresponds to an effective voltage increment given by

$$\Delta v = v_k - v_{k-3} \qquad (8)$$

which is equal to $\delta_k$.

According to the present invention, the power produced by the photovoltaic system is sampled with at least four voltages $v_{k-3}$, $v_{k-2}$, $v_{k-1}$ and $v_k$, out of these voltages at least two are the same and the first and last voltages are different. In the example of Figure 3, voltages $v_{k-3}$ and $v_{k-1}$, and $v_{k-2}$ and $v_k$ have the same value.

Further, according to the method the power variation $\Delta p$ between the first and last samples is estimated by using the obtained power samples $p_{k-3}$, $p_{k-2}$, $p_{k-1}$ and $p_k$. As shown above, the change of power due to changed atmospheric conditions is removed from the estimated power variation. According to the embodiment illustrated in Figure 3, the power variation $\Delta p$ is calculated according to (7).

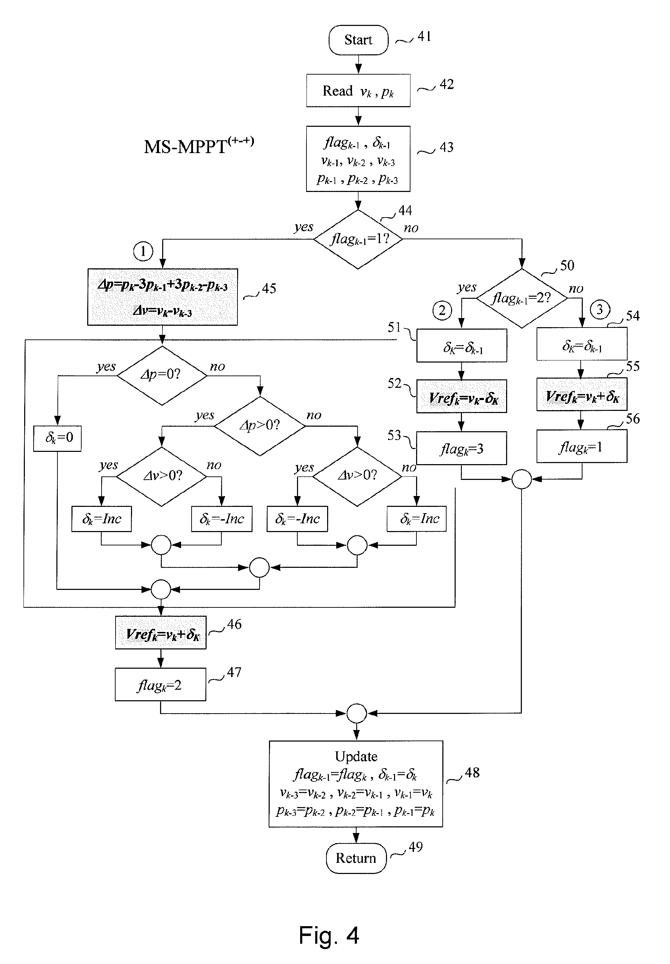

The above obtained parameters $\Delta p$ and $\Delta v$ can now be used in the P&O- based method for tracking the maximum power point. The flowchart of the overall MS- MPPT is shown in Figure 4, where gain 1/4 in (7) has been neglected as it does not affect the sign function and the decisions made in the tracker. This embodiment of the method is referred to as MS- MPPT$^{(+-+)}$, where superscript (+- +) indicates the sequence of application of the voltage increment $\delta_k$, that is, add- subtract- add.

In the flowchart of Figure 4, the procedure is started in 41 and values of voltage $v_k$ and power $p_k$ are read in 42. The value of voltage may be the actual measured value from the output of the panel or it may be the voltage reference. The used variables are presented in block 43.

In the procedure the value of flag$_{k-1}$ is checked in 44, and depending on the value the procedure is branched. If the value of flag$_{k-1}$ is 1, then the procedure has already gone through branches labeled 2 and 3 and values for $p_{k-3}$, $p_{k-2}$, $p_{k-1}$, $p_k$, $v_{k-3}$ and $v_k$ are stored. These values are then used in block 45 for calculating the power variation $\Delta p$ and the voltage increment $\Delta v$ according to (7) and (8).

The calculated power variation and the voltage increment are fed to the MPP algorithm in which the direction of the next voltage increment is determined. This algorithm is already described in connection with Figure 1 where it is presented as block 5.

After the direction (or sign) of the voltage increment is determined, a new voltage reference $Vref_k$ is calculated in 46 by summing the current voltage $v_k$ and the determined increment $\delta_k$ and after that $flag_k$ is set in 47 to value 2.

In block 48 the values of variables are updated for a new sampling instant and the procedure returns in 49 to start.

Once the procedure returns to start, the values of voltage $v_k$ and power $p_k$ are read in 42, and the procedure continues through flag$_{k-1}$ checks in 44 and 50 to branch 2, in which the value of $\delta_K$ is given the previous value of $\delta_{k-1}$ in 51 and the voltage reference $Vref_k$ is set in 52 to a new value by subtracting $\delta_K$ from the current voltage value $v_k$. Also, the $flag_k$ is set in 53 to value 3. After this the procedure continues to update block 48 which stores the voltage and power values for a new sampling instant.

The value of flag$_{k-1}$ is now 3 and the procedure returns to start in 41. The power and voltage values are again sampled and the procedure continues to the branch labeled 3. In this branch the $\delta_K$ obtains in 54 the value from the previous round $\delta_{k-1}$, and the new reference voltage is calculated by adding in 5 $\delta_K$ to the voltage $v_k$ and the $flag_k$ is set in 56 to 1. After the update in block 48, the procedure returns to start.

Now the $flag_{k-1}$ has the value 1 and, after sampling of the voltage and power, all required samples are ready for the calculation of power variation $\Delta p$ and voltage increment $\Delta v$ in block 45.

The above procedure is continued throughout the use of the tracker. It should be noted that between return block 49 and start block 41 of the procedure the actual pv-system is also controlled, meaning that the voltage reference is changed according to the reference value obtained from the procedure.

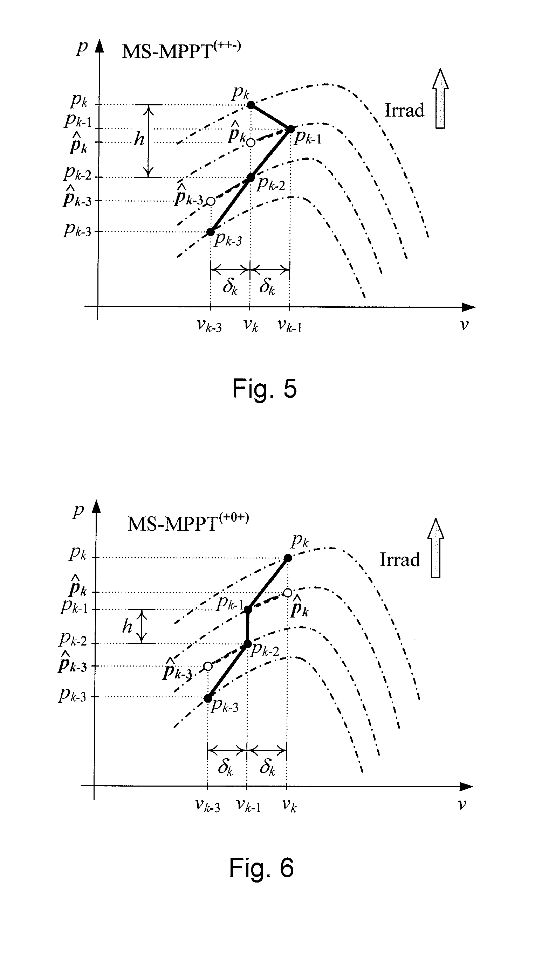

The voltage *increment* $\delta_k$ can be applied using other combinations, which yield to variations of the method described above. For instance, consider the case where the increment is added in the 1 st and 2nd consecutive sampling times, but subtracted in the 3rd sampling time. The *pv-* characteristic plot of Figure 5 shows the operation of this alternative scheme referred to as MS- MPPT$^{(++-)}$. Following a similar procedure as described above, the variation of power is computed in this case as

$$\Delta p = \frac{1}{4}\left(-p_k + p_{k-1} + p_{k-2} - p_{k-3}\right) \qquad (9)$$

corresponding to an effective voltage increment given by

$$\Delta v = v_k - v_{k-3} \qquad (10)$$

These terms can now be used in the flowchart of Figure 4 with the necessary modifications in the blocks 45, 46, 52 and 55 to guarantee that the increment is applied in the appropriate sequence. In the case of MS- MPPT$^{(++-)}$, block 45 should have equations (9) and (10), blocks 46 and 52 should have $Vref_k = v_k + \delta_k$ and block 55 $Vref_k = v_k - \delta_k$.

It is also possible to allow zero increments during the sampling periods. This is shown in the $pv$ characteristic plot of Figure 6. In this case, the increment $\delta_k$ is applied during the first and 3rd sampling periods, while zero increment is applied during the 2nd sample period. This method is thus referred as MS- MPPT$^{(+0+)}$.

Notice that application of increment $\delta_k$ produces an effective increment of $2\delta_k$ at the end of the process. In this case, simply select parameter $Inc = a/2$ instead of $Inc = a$ to get an effective increment of amplitude $a$.

The power variation can now be computed as

$$\Delta p = \frac{1}{2}\left(p_k - 3p_{k-1} + 3p_{k-2} - p_{k-3}\right) \tag{11}$$

corresponding to an effective voltage increment given by

$$\Delta v = v_k - v_{k-3} \tag{12}$$

These terms can now be used in the flowchart of Figure 4 with the necessary modifications in the blocks 45, 46, 52 and 55 to guarantee that the increment is applied in the appropriate sequence. In the case of MS- MPPT$^{(+0+)}$, block 45 should have equations (11) and (12), blocks 46 and 55 should have $Vref_k = v_k + \delta_k$ and block 52 $Vref_k = v_k$.

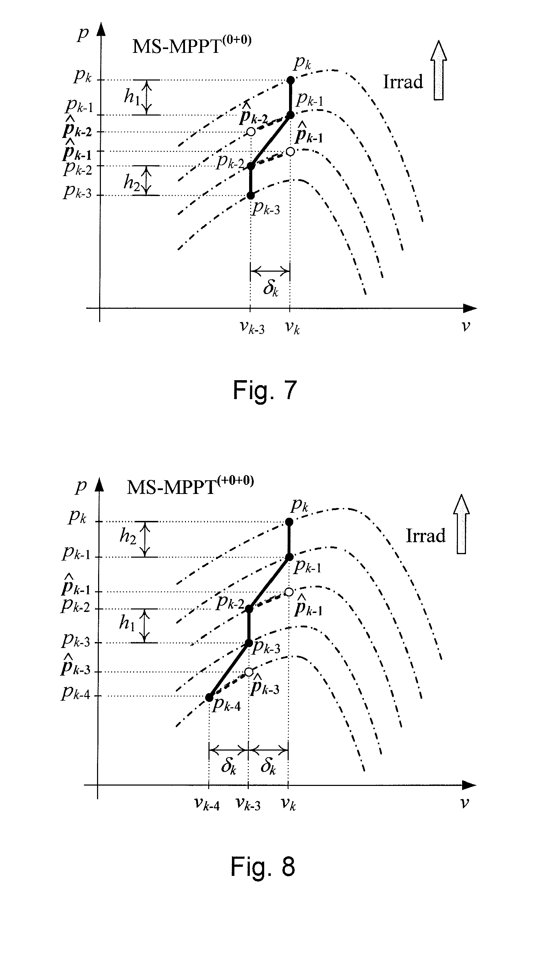

Another option using the same number of sampling periods consists in applying zero increments during the first and 3rd sampling periods, while applying the *increment* $\delta_k$ during the 2nd sample period. This is shown in the $pv$ characteristic plot of Figure 7. This modification is thus referred to as MS- MPPT$^{(0+0)}$.

The power variation can now be computed as

$$\Delta p = \frac{1}{2}\left(-p_k + 3p_{k-1} - 3p_{k-2} + p_{k-3}\right) \tag{13}$$

corresponding to an effective voltage increment given by

$$\Delta v = v_k - v_{k-3} \tag{14}$$

These terms can now be used in the flowchart of Figure 4 with the necessary modifications in the blocks 45, 46, 52 and 55 to guarantee that the increment is applied in the appropriate sequence. In the case of MS- MPPT$^{(0+0)}$, block 45 should have equations (13) and (14), blocks 46 and 55 should have $Vref_k = v_k$ and block 52 $Vref_k = v_k + \delta_k$.

The options can be extended by increasing the number of sampling periods involved. For instance, considering four sampling periods, the following modifications can be derived. Notice that the flowcharts of these schemes require an additional branch, as four sampling periods are involved this time.

In the case presented in the $pv$- plot of Figure 8, the increment $\delta_k$ is applied during the first and 3rd sampling periods, while zero increment is applied during the 2nd and 4th sampling periods. The modification is thus referred to as MS- MPPT$^{(+0+0)}$. In this case, power variation and the corresponding effective voltage increment can now be computed as

$$\Delta p = \frac{1}{2}\left(-p_k + 2p_{k-1} - 2p_{k-2} + 2p_{k-3} - p_{k-4}\right) \tag{15}$$

**EP 2 657 804 A1**

$$\Delta v = v_k - v_{k-4} \tag{16}$$

As before, notice that the effective increment at the end of the process will be $2\delta_k$. In this case, select *Inc = a/2* instead of *Inc = a* to get an effective increment of amplitude a .

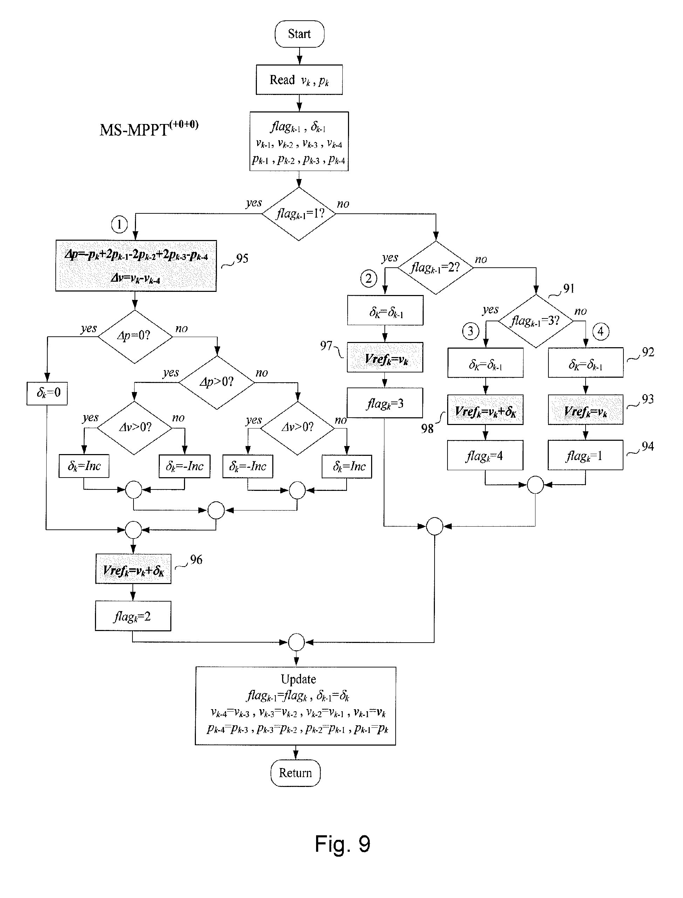

The flowchart of this method is shown in Figure 9, where it can be observed the introduction of a 4th additional branch as the method considers 4 sampling periods. The basic structure of the flowchart of Figure 9 is the same as in connection with the flowchart of Figure 4. In the branch labeled 1, the power variation and the voltage increment are calculated once the procedure has gone through the other branches and collected the required measurements of voltage and power.

The difference between the flowcharts of Figure 9 and Figure 4 is that the flowchart of Figure 9 comprises an additional branch labeled 4 to which the procedure branches 91 when $flag_{k-1}$ has a value that is different from 1, 2 or 3, i.e., when $flag_{k-1}$ is 4. In branch 4, the new increment $\delta_K$ receives 92 the value of the previous increment $\delta_{k-1}$, voltage reference $Vref_k$ is set 93 to value $v_k$ and $flag_k$ is set to 1.

Step 95 of Figure 9 comprises equations (15) and (16), from the values of which the sign of $\delta_K$ is calculated using the MPP-algorithm as in Figure 4. In steps 96, 97, 98 and 93, the voltage reference is changed according to the embodiment so that the +0+0 procedure is obtained.

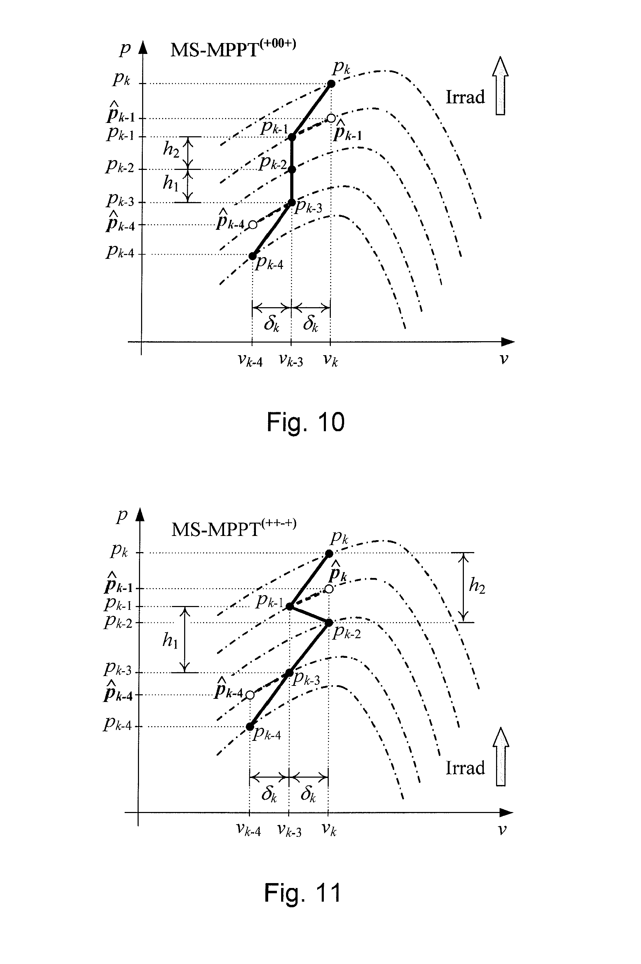

Other possibilities involving 4 sampling times are presented in Figures 10 and 11. These methods are referred to as MS- MPPT$^{(+00+)}$ and MS- \MPPT$^{(++-+)}$. The power and voltage variations for the MS- MPPT$^{(+00+)}$ are given by

$$\Delta p = \frac{1}{2}\left(-p_k - 2p_{k-1} - 2p_{k-2} + 2p_{k-3} - p_{k-4}\right) \tag{17}$$

$$\Delta v = v_k - v_{k-4} \tag{18}$$

And for the MS- MPPT$^{(++-+)}$ are given by

$$\Delta p = \frac{1}{6}\left(p_k - 4p_{k-1} + 3p_{k-2} + 2p_{k-3} - 2p_{k-4}\right) \tag{19}$$

$$\Delta v = v_k - v_{k-4} \tag{20}$$

These variations can be used in the flowchart of Figure 9 with the necessary modifications in the blocks 95, 96, 97, 98 and 93 to guarantee that the increment is applied in the appropriate sequence and value.

In the following, simulation results of the MS- MPPT method of the disclosure are presented. Only the responses for the MS- MPPT$^{(+-+)}$ are considered here, as the responses for the other MS- MPPT variations are quite similar. For comparison purposes the results of the conventional P&O are also included.

In both cases a single-stage three-phase inverter grid connected by means of an LCL filter is considered. The PV panel is directly connected to the inverter together with a DC capacitor of 200 $\mu$F. The amplitude of the grid voltage is fixed to 325 V. Notice that the voltage in the PV panel $v$ is limited to voltages well above 650 V to guarantee a proper operation. Suitable synchronization and grid controller schemes have been used to guarantee a fast and appropriate current control. Also, a PI controller has been used to regulate the voltage of the DC link capacitor $v$ towards the voltage reference imposed by the MPPT method *Vref.* These schemes are not described here as they are not within the scope of the present disclosure.

Parameters for both the MS- MPPT$^{(+-+)}$ and P&O have been fixed to $T_s$ = 2 ms and *Inc* = 2 V. Notice that to have a fairer comparison the sampling time of the P&O could have been selected three times bigger than that of the MS- MPPT$^{(+-+)}$, i.e., $T_s$ = 6 ms, as the latter uses three sampling times. However, a similar performance was observed using either choice.

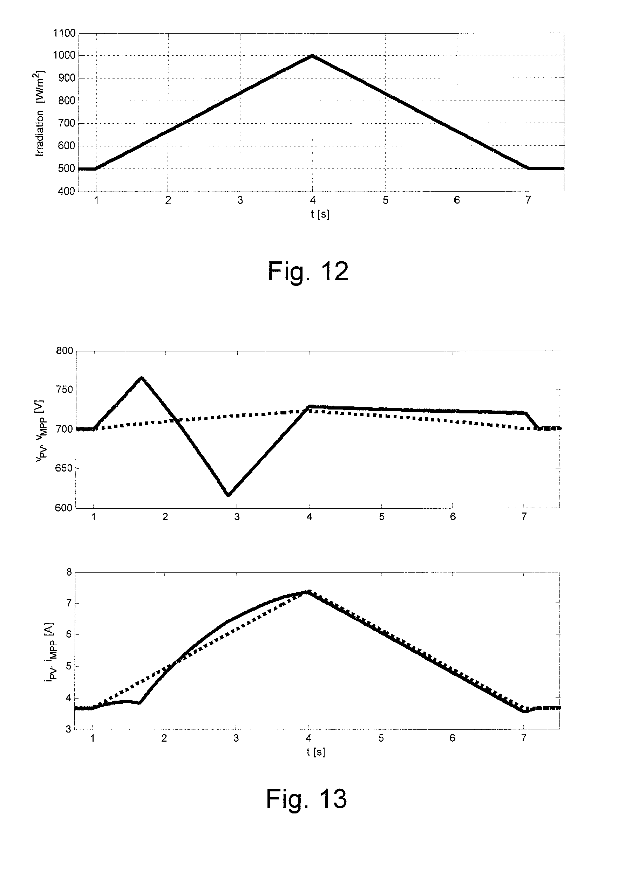

Figure 12 shows the irradiation profile used during the tests. The irradiation starts at a constant value of *G* =

7

$500$ W/m$^2$, then at $t = 1$ s a ramp going from $G = 500$ to $G = 1000$ W/m$^2$ in 3 s. At $t = 4$ s, the irradiation goes back from $G = 1000$ to $G = 500$ W/m$^2$ again during a period of 3 s. After $t = 7$ s the irradiation is maintained at a constant value of $G = 500$ W/m$^2$.

Figures 13 to 15 show the responses of the conventional P&O method to irradiation changes according to the profile of Figure 12. Here and in what follows, the responses are shown as solid lines, while the correct references, i.e., the corresponding points in the MPP, are shown as dotted lines.

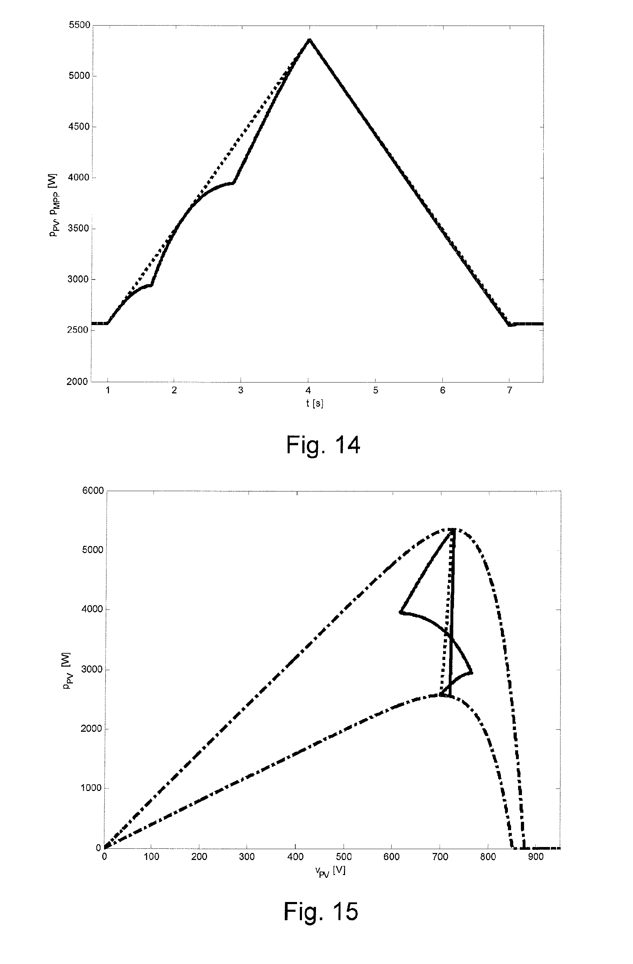

Notice that, according to the top plot of Figure 13, the P&O method is unable to provide the correct voltage reference $Vref_k$ during irradiation changes, and thus the voltage response $v$ is unable to track the correct voltage reference $v_{MPP}$ located at the MPP. It is observed that the difference between the voltage response $v$ (solid) with respect to the correct reference $v_{MPP}$ (dotted) is much more evident during the increase of irradiation as discussed above. Out of this, the PV current response shown in the bottom plot of Figure 13 has to be adjusted to keep the extracted power as close as possible to the maximum available power. However, due to the imperfect voltage and current responses, the extracted power $p$ shown in Figure 14 (solid) does not match at every moment the maximum available power $p_{MPP}$ (dotted).

The loss of MPP tracking is even more evident in the $pv$ curve (p vs. $v$) shown in Figure 15. Notice that the P&O is not able to track the set of MPPs (dotted line) during irradiation changes. The difference is much more evident during the increase of irradiation as expected. Also, in this plot, the two $pv$ characteristic curves for constant irradiations at $G = 500$ W/m$^2$ and $G = 1000$ W/m$^2$ are presented (dash-dotted line).

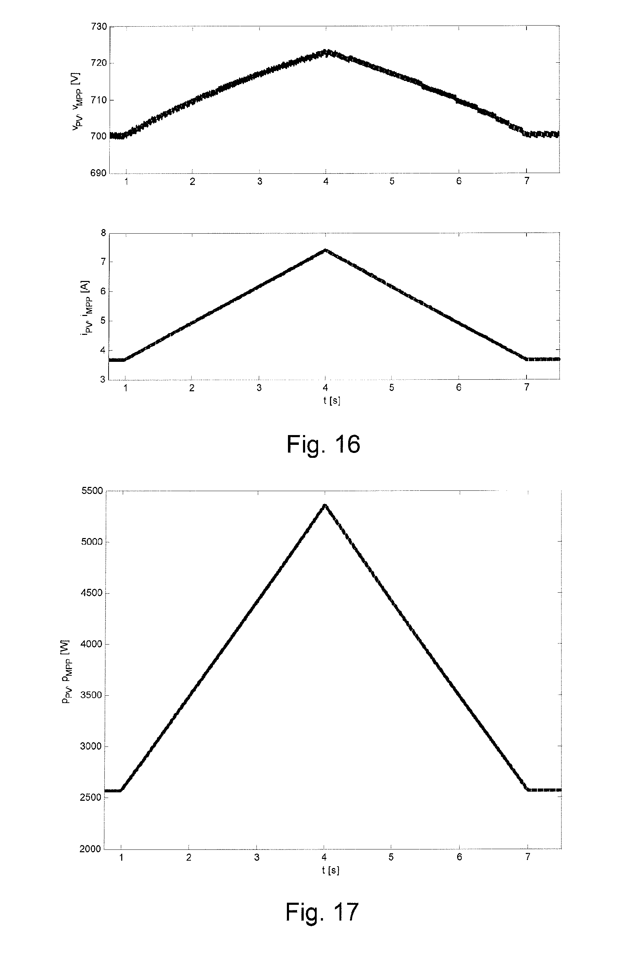

Figures 17 to 18 show the responses of the MS- MPPT$^{(+-+)}$ procedure using the method of the invention to irradiation changes according to profile of Figure 12. Notice that in contrast to responses of conventional P&O, the responses of the MS- MPPT$^{(+-+)}$ match very well the correct references, i.e., the corresponding points in the MPP.

As shown in the top plot of Figure 16, the MS-MPPT method provides the correct voltage reference $Vref_k$ during irradiation changes, and thus the voltage response $v$ perfectly tracks the correct reference, i.e., the MPP voltage $v_{MPP}$. In other words, the difference between the voltage response $v$ (solid) with respect to the correct reference (dotted) is almost imperceptible, except for a relatively small ripple. Figure 16 shows that the PV current response maintains its value very close to the correct reference, i.e., the current in the MPP. As a result, the extracted power shown in Figure 17 (solid) matches at every moment the maximum available power (dotted).

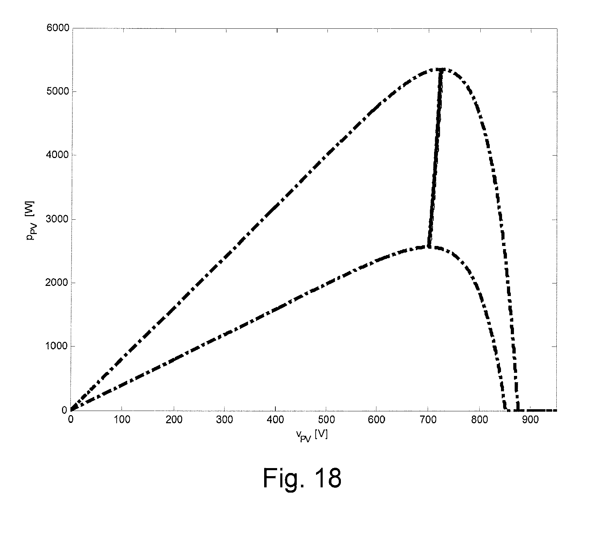

The MPP tracking is better observed in the $pv$ curve depicted in Figure 18. Notice that the MS- MPPT is able to track perfectly well the set of MPPs (dotted) during irradiation changes. Also, in this plot the two $pv$ characteristic curves for constant irradiations at 500 W/m$^2$ and 1000 W/m$^2$ are presented (dash- dotted) .

Any one of the above embodiments may be implemented by means of a computer or corresponding digital signal processing equipment provided with suitable software, for example. Such a computer or digital signal processing equipment preferably comprises at least a working memory (RAM) providing a storage area for arithmetical operations and a central processing unit (CPU), such as a general-purpose digital signal processor. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the invention further preferably comprises suitable input means for receiving e.g. measurement and/or control data, which input means thus enable e.g. the monitoring of current and voltage quantities, and output means for outputting e.g. fault alarms and/or control data. It is also possible to use a specific integrated circuit or circuits, and/or discrete components and devices for implementing the functionality according to any one of the embodiments.

The invention can be implemented in existing system elements, such as various MPP trackers or other controllers operated in connection with PV modules, or by using separate dedicated elements or devices in a centralized or distributed manner. Present MPP trackers or inverter structures in connection with PV modules typically comprise processors and memory that can be utilized in the functions according to embodiments of the invention. Thus, all modifications and configurations required for implementing an embodiment of the invention may be performed as software routines, which may be implemented as added or updated software routines. If the functionality of the invention is implemented by software, such software can be provided as a computer program product comprising computer program code which, when run on a computer, causes the computer or corresponding arrangement to perform the functionality according to the invention as described above. Such a computer program code may be stored or generally embodied on a computer readable medium, such as suitable memory, e.g. a flash memory or a disc memory from which it is loadable to the unit or units executing the program code. In addition, such a computer program code implementing the invention may be loaded to the unit or units executing the computer program code via a suitable data network, for example, and it may replace or update a possibly existing program code.

It is clear to the skilled person that other combinations of perturbations or increments can easily be generated using a different number of sampling periods. The invention is thus not limited to the embodiments that are described above.

Further, in the above, only changes in irradiation are considered. The same negative effect is observed under temperature changes, i.e. the change of temperature of the photovoltaic panel affects the power obtained from the panel. The change of temperature or irradiation or the combination of the temperature and irradiation changes are taken into account by the present invention although only the change of irradiation is used as an example. Moreover, only the increasing irradiance case is considered in the above description as the same results apply to decreasing irradiance.

It will be obvious to a person skilled in the art that, as the technology advances, the inventive concept can be implemented in various ways. The invention and its embodiments are not limited to the examples described above but may vary within the scope of the claims.

REFERENCES

[1] M.C. Cavalcanti, K.C. Oliveira, G.M. Azevedo, D. Moreira and F.A. Neves, "Maximum power point tracker techniques for photovoltaic systems," in Proc. Power Electronics and Intelligent Control for Energy Conservation PELINCEC'05, 2005, Warsaw, pp. 1-8.

[2] T. Esram, P.L. Chapman, "Comparison of Photovoltaic Array Maximum Power Point Tracking Techniques," IEEE Transactions on Energy Conversion, Vol. 22(2), pp. 439-449, June 2007.

[3] E. Koutroulis, K. Kalaitzakis, N.C. Voulgaris, "Development of a microcontroller-based, photovoltaic maximum power point tracking control system," IEEE Trans. on Power Electronics, Vol. 16(1), pp. 46-54, Jan. 2001.

[4] A. Pandey, N. Dasgupta and A.K. Mukerjee, "High-Performance Algorithms for Drift Avoidance and Fast Tracking in Solar MPPT System," IEEE Transactions on Energy Conversion, Vol. 23(2), pp. 681-689, June 2008.

[5] Hussein, K.H.; Muta, I.; Hoshino, T.; Osakada, M., "Maximum photovoltaic power tracking: an algorithm for rapidly changing atmospheric conditions," IEE Proceedings - Generation, Transmission and Distribution, Vol. 142(1), pp. 59-64, Jan. 1995.

[6] D. Sera, R. Teodorescu, J. Hantschel, and M. Knoll, "Optimized Maximum Power Point Tracker for Fast-Changing Environmental Conditions," IEEE Transactions on Industrial Electronics, Vol. 55(7), pp. 2629- 2637, July 2008.

[7] M. Miyatake, T. Inada, I. Hiratsuka, H. Zhao, H. Otsuka and M. Nakano, "Control characteristics of a fibonacci-search-based maximum power point tracker when a photovoltaic array is partially shaded," in Proc. 4th International Power Electronics and Motion Control Conference IPEMC'04, 14-16 Aug. 2004, Vol. 2, pp. 816 - 821.

[8] T.Y. Kim, H.G. Ahn, S.K. Park and Y.K. Lee, "A novel maximum power point tracking control for photovoltaic power system under rapidly changing solar radiation," in Proc. IEEE International Symposium on Industrial Electronics ISIE'01, 12-16 June, 2001, Vol. 2, pp. 1011-1014.

[9] D. Sera, R. Teodorescu, R. Tepdorescu and F. Blaabjerg, "Improved MPPT for Rapidly Changing Environmental Conditions," in Proc. 12th International Power Electronics and Motion Control Conference EPE-PEMC'06, 2006, pp. 1614-1619.

**Claims**

1. A method of estimating the power variation in response to change of voltage reference in a maximum power point tracker of a photovoltaic system, **characterized by** the method comprising

   sampling the power produced by the photovoltaic system with a fixed number of voltages, out of which voltages some are the same and some are different by an amount of a given increment, with the restriction that the average of these voltages produce a net change with respect to the starting voltage in the direction of the increment calculated during a previous estimation of the power variation, and

   estimating the power variation between the first and last samples by using the obtained power samples, in which estimated power variation the change of power due to changed environmental conditions is removed.

2. A method according to claim 1, wherein the fixed number of voltages are obtained by

   calculating a voltage reference, and

   changing the voltage reference according to a set pattern by adding or subtracting a voltage increment to the previous value of the voltage reference or by keeping the voltage value of the voltage reference constant, wherein the sign of the voltage increment is calculated from the previously estimated power variation together with the sign of the previously used voltage increment.

**3.** A method according to claim 1 or 2, wherein calculation of the voltage reference comprises
depending on the sign of the previous voltage increment and the estimated power variation, either adding the voltage increment to the previous voltage reference, subtracting the voltage increment from the previous voltage reference or leaving the voltage reference unchanged.

**4.** A method according to claim 1, 2 or 3, wherein the sampling of the power comprises
providing a voltage reference to the photovoltaic system,
controlling the output voltage of the panel to the reference, sampling the power produced by the system,
changing the voltage reference, and
repeating the above steps so that a fixed number of samples are obtained.

**5.** A method according to any of the claims 1, 2 or 3, wherein the voltage reference is changed once in a sampling period and the change of voltage reference between the first and the average of the fixed number of voltages is in the direction of the increment calculated during a previous estimation of the power variation.

**6.** An arrangement for estimating the power variation in response to change of voltage reference in a maximum power point tracker of a photovoltaic system, **characterized by** the arrangement comprising
means for sampling the power produced by the photovoltaic system with a fixed number of voltages, out of which voltages some are the same and some are different by an amount of a given increment, and
means for estimating the power variation between the first and last sample by using the obtained power samples, in which estimated power variation the change of power due to changed atmospheric conditions is removed.

**7.** A computer program product comprising computer program code, wherein the execution of the program code in a computer causes the computer to carry out the steps of the method according to any one of claims 1 to 5.

P&O-MPPT

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Europäisches
Patentamt

European
Patent Office

Office européen
des brevets

**EUROPEAN SEARCH REPORT**

Application Number

EP 12 16 5175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | D. SERA ET AL: "Improved MPPT method for rapidly changing environmental conditions", 2006 IEEE INTERNATIONAL SYMPOSIUM ON INDUSTRIAL ELECTRONICS, 1 July 2006 (2006-07-01), pages 1420-1425, XP055044309, DOI: 10.1109/ISIE.2006.295680 ISBN: 978-1-42-440496-4 * the whole document * | 1-7 | INV. G05F1/67 |
| A | YING-TUNG HSIAO ET AL: "Maximum power tracking for photovoltaic power system", CONFERENCE RECORD OF THE 2002 IEEE INDUSTRY APPLICATIONS CONFERENCE : 37TH IAS ANNUAL MEETING ; 13 - 18 OCTOBER 2002, PITTSBURGH, PENNSYLVANIA, USA; [CONFERENCE RECORD OF THE IEEE INDUSTRY APPLICATIONS CONFERENCE. IAS ANNUAL MEETING], IEEE SERVICE CE, vol. 2, 13 October 2002 (2002-10-13), pages 1035-1040, XP010610008, DOI: 10.1109/IAS.2002.1042685 ISBN: 978-0-7803-7420-1 * page 1036 - page 1037 * | 1-7 | **TECHNICAL FIELDS SEARCHED (IPC)** G05F |
| A | JP 2001 060119 A (MATSUSHITA ELECTRIC WORKS LTD) 6 March 2001 (2001-03-06) * abstract; figure 5 * | 1-7 | |
| A | EP 0 628 901 A2 (CANON KK [JP]) 14 December 1994 (1994-12-14) * abstract; figures 3-5 * | 1-7 | |

The present search report has been drawn up for all claims

| Place of search | Date of completion of the search | Examiner |
|---|---|---|
| The Hague | 30 November 2012 | Arias Pérez, Jagoba |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 12 16 5175

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2012

| Patent document cited in search report | | Publication date | Patent family member(s) | | Publication date |
|---|---|---|---|---|---|
| JP 2001060119 | A | 06-03-2001 | NONE | | |
| EP 0628901 | A2 | 14-12-1994 | AU | 680893 B2 | 14-08-1997 |
| | | | AU | 6464994 A | 15-12-1994 |
| | | | DE | 69420467 D1 | 14-10-1999 |
| | | | DE | 69420467 T2 | 13-04-2000 |
| | | | EP | 0628901 A2 | 14-12-1994 |
| | | | JP | 2771096 B2 | 02-07-1998 |
| | | | JP | 6348352 A | 22-12-1994 |
| | | | US | 5654883 A | 05-08-1997 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **M.C. CAVALCANTI ; K.C. OLIVEIRA ; G.M. AZEVEDO ; D. MOREIRA ; F.A. NEVES.** Maximum power point tracker techniques for photovoltaic systems. *Proc. Power Electronics and Intelligent Control for Energy Conservation PELINCEC'05,* 2005, 1-8
- **T. ESRAM ; P.L. CHAPMAN.** Comparison of Photovoltaic Array Maximum Power Point Tracking Techniques. *IEEE Transactions on Energy Conversion,* June 2007, vol. 22 (2), 439-449
- **E. KOUTROULIS ; K. KALAITZAKIS ; N.C. VOULGARIS.** Development of a microcontroller-based, photovoltaic maximum power point tracking control system. *IEEE Trans. on Power Electronics,* January 2001, vol. 16 (1), 46-54
- **A. PANDEY ; N. DASGUPTA ; A.K. MUKERJEE.** High-Performance Algorithms for Drift Avoidance and Fast Tracking in Solar MPPT System. *IEEE Transactions on Energy Conversion,* June 2008, vol. 23 (2), 681-689
- **HUSSEIN, K.H. ; MUTA, I. ; HOSHINO, T. ; OSAKADA, M.** Maximum photovoltaic power tracking: an algorithm for rapidly changing atmospheric conditions. *IEE Proceedings - Generation, Transmission and Distribution,* January 1995, vol. 142 (1), 59-64
- **D. SERA ; R. TEODORESCU ; J. HANTSCHEL ; M. KNOLL.** Optimized Maximum Power Point Tracker for Fast-Changing Environmental Conditions. *IEEE Transactions on Industrial Electronics,* July 2008, vol. 55 (7), 2629-2637
- **M. MIYATAKE ; T. INADA ; I. HIRATSUKA ; H. ZHAO ; H. OTSUKA ; M. NAKANO.** Control characteristics of a fibonacci-search-based maximum power point tracker when a photovoltaic array is partially shaded. *Proc. 4th International Power Electronics and Motion Control Conference IPEMC'04,* 14 August 2004, vol. 2, 816-821
- **T.Y. KIM ; H.G. AHN ; S.K. PARK ; Y.K. LEE.** A novel maximum power point tracking control for photovoltaic power system under rapidly changing solar radiation. *Proc. IEEE International Symposium on Industrial Electronics ISIE'01,* 12 June 2001, vol. 2, 1011-1014
- **D. SERA ; R. TEODORESCU ; R. TEPDORESCU ; F. BLAABJERG.** Improved MPPT for Rapidly Changing Environmental Conditions. *Proc. 12th International Power Electronics and Motion Control Conference EPE-PEMC'06,* 2006, 1614-1619